(19) Europäisches Patentamt
European Patent Office
Office européen des brevets

(11) EP 4 177 288 A1

(12) EUROPEAN PATENT APPLICATION

(43) Date of publication:
**10.05.2023 Bulletin 2023/19**

(21) Application number: **21206332.5**

(22) Date of filing: **03.11.2021**

(51) International Patent Classification (IPC):
***C08G 18/76*** *(2006.01)* ***C08J 9/14*** *(2006.01)*
***C08J 9/12*** *(2006.01)* ***C08G 18/48*** *(2006.01)*
***C08G 18/50*** *(2006.01)* ***C08G 18/18*** *(2006.01)*
***C08J 9/08*** *(2006.01)*

(52) Cooperative Patent Classification (CPC):
**C08G 18/7671; C08G 18/18; C08G 18/4829; C08G 18/5024; C08J 9/02; C08J 9/141; C08J 9/146; C08J 9/149;** C08G 2110/0025; C08G 2110/005; C08J 2203/14; C08J 2203/182; C08J 2205/10; C08J 2375/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
- **WEI, Wenping**
**Huangpu District, Shanghai, 200025 (CN)**
- **LI, Liqiang**
**Pudong, Shanghai, 200120 (CN)**
- **GAO, Jianwu**
**Baoshan District of Shanghai, 201901 (CN)**
- **GAO, Zhao**
**Shanghai, 201206 (CN)**

(74) Representative: **Levpat**
**c/o Covestro AG**
**Gebäude K12**
**51365 Leverkusen (DE)**

# (54) METHOD FOR PREPARING A RIGID POLYURETHANE FOAM

(57) The invention relates to a polyol composition, a corresponding polyurethane reaction system and a method for preparing a rigid polyurethane foam.

EP 4 177 288 A1

## Description

### Technical field

The invention relates to a method for preparing a rigid polyurethane foam, and a rigid polyurethane foam prepared thereby and use thereof.

### Prior art

Panels of polyurethane rigid foams have light weight and excellent propertiy of thermal insulation, and are widely used in refrigerated boxes, refrigerated trucks, freezer houses and buildings. In the production of polyurethane sandwich panels, the preparation of discontinuous boards has advantages of flexibility and simple process, and plays a very important role in the market.

In cold-chain transportation, the thermal insulation performance of the transportation equipment is always concerned. How to improve the thermal insulation performance of products is also an important indicator pursued by various manufacturers.

Polyurethane resins are usually formed by mixing an isocyanate component and a polyol composition. How to produce rigid polyurethane foams with more excellent thermal insulation performance in an energy-saving, economical and environmentally friendly manner is a problem to be solved urgently in the industry.

US5470891A discloses a method for preparing low-density foams with very good dimensional stability.

JP3660375B2 mentions a method for preparing high-density polyurethane PIR rigid foams.

CN104334599A mentions a method for preparing polyurethane PIR rigid foams under negative pressure.

Despite the above disclosures, there is still a need in the art for more optimized polyol compositions and corresponding polyurethane reaction systems.

### Summary of the invention

One aspect of the present invention is to provide a polyol composition comprising component B comprising:

B1) 20-90 pbw, preferably 20-70 pbw, based on 100 pbw of component B, of a polyether polyol with a functionality of ≥3 and a hydroxyl value of >200 mgKOH/g, preferably 200-550 mgKOH/g, more preferably 250-500 mgKOH/g (test method ISO 14900-2017);

B2) 3-40 pbw, preferably 5-35 pbw, more preferably 10-20 pbw, based on 100 pbw of component B, of at least one polyether polyol with a functionality of 3-5 and a hydroxyl value of <480 mgKOH/g (test method ISO 14900-2017) started from an aromatic amine; component C comprising:

C1) 0.2-3 pbw, preferably 0.3-2.5 pbw, more preferably 0.3-1 pbw, based on 100 pbw of component B of at least one organic acid, preferably formic acid;

C2) at least one physical blowing agent.

Preferably, component C) further comprises

C3) 0.3-3% by weight, preferably 0.4-2.5% by weight, more preferably 0.6-2.0% of water, based on the total weight of component B.

Preferably, the viscosity at 25 °C of the mixture of components of the polyol composition excluding component C2) is 1000-5000 mPa·s, preferably 1200-4500 mPa·s, more preferably 1500-4000 mPa·s (test method ISO 3219-1993). It refers to the viscosity of the polyol composition without component C2).

Preferably, the pH value of the mixture of components of the polyol composition excluding component C2) is 4.5-7, preferably 5-6.8, more preferably 5-6.5. It refers to the pH value of the polyol composition without component C2).

Preferably, said C2) at least one physical blowing agent is at least one of a pentane, halogenated olefin or a mixture thereof, preferably a mixture of at least one pentane and at least one halogenated olefin. The pentane is preferably selected from cyclopentane, isopentane, n-pentane or a combination thereof, and the halogenated olefin is preferably selected from monochlorotrifluoropropene, hexafluorobutene or a combination thereof.

Preferably, the polyol composition further comprises at least one of the following constituents:

B3) 5-45 pbw, preferably 7-25 pbw, based on 100 pbw of component B, of a poly ether polyol with a functionality of ≥4 and a hydroxyl value of < 400 mgKOH/g (test method ISO 14900-2017);

B4) 20-70 pbw, preferably 30-65 pbw, based on 100 pbw of component B, of a polyether polyol with a functionality of > 4 and a hydroxyl value of > 400 mgKOH/g (test method ISO 14900-2017);

B5) 5-35 pbw, preferably 10-20 pbw, based on 100 pbw of component B, of a polyether polyol with a functionality of 3-5, preferably 3.5-4.2, a hydroxyl value of <450 mgKOH/g (test method ISO 14900-2017) and viscosity at 25°C of <30000 mPa·s (test method ISO 3219-1993)started from o-toluenediamine; and

B6) 0-20 pbw, preferably 0-15 pbw, based on 100 pbw of component B, of a polyester polyol with a functionality of ≤3 and a hydroxyl value of <450 mgKOH/g (test method ISO 14900-2017).

Preferably, the cream time of a polyurethane reaction system comprising the inventive polyol composition comprising an organic acid is reduced by ≥10%, preferably ≥15%, more preferably ≥20%, compared with that of a polyurethane reaction system comprising the same polyol composition but without the organic acid. Specifically, if the cream time of a polyurethane reaction system comprising the polyol composition without organic acid is X and the cream time of a polyurethane reaction system comprising the inventive polyol composition comprising an organic acid is Y, the reduction in cream time of the polyurethane reaction system of the polyol composition comprising an organic acid is (X-Y)* 100%/X.

Another aspect of the present invention is to provide a polyurethane reaction system comprising:

component A comprising polyisocyanate;

component B comprising

B1) 20-90 pbw, preferably 20-70 pbw, based on 100 pbw of component B, of a polyether polyol with a functionality of ≥3 and a hydroxyl value of >200 mgKOH/g, preferably 200-550 mgKOH/g, more preferably 250-500 mgKOH/g (test method ISO 14900-2017);

B2) 3-40 pbw, preferably 5-35 pbw, more preferably 10-20 pbw, based on 100 pbw of component B, of at least one polyether polyol started from an aromatic amine with a functionality of 3-5 and a hydroxyl value of <480 mgKOH/g (test method ISO 14900-2017); component C, blowing agent, comprising

C1) 0.2-3 pbw, preferably 0.3-2.5 pbw, more preferably 0.3-1.0 pbw, based on 100 pbw of component B, of at least one organic acid, preferably formic acid;

C2) at least one physical blowing agent.

Preferably, component C) further comprises

C3) 0.3-3% by weight, preferably 0.4-2.5% by weight, more preferably 0.6-2.0% of water, based on the total weight of component B.

Preferably, the viscosity at 25°C of the mixture of components of the polyol composition excluding C2 (physical blowing agent) is 1000-5000 mPa·s, preferably 1200-4500 mPa·s, more preferably 1500-4000 mPa·s (test method ISO 3219-1993).

Preferably, the hydroxyl value of component B is 200-450 mg KOH/g, preferably 250-400 mgKOH/g, more preferably 250-350 mgKOH/g (test method ISO 14900-2017).

Preferably, said component B comprises at least one of the following constituents:

B3) 5-45 pbw, preferably 7-25 pbw, based on component B, of a polyether polyol with a functionality of ≥4 and a hydroxyl value of <400 mgKOH/g (test method ISO 14900-2017;

B4) 20-70 pbw, preferably 30-65 pbw, based on 100 pbw of component B, of a polyether polyol with a functionality of >4 and a hydroxyl value of >400 mgKOH/g (test method ISO 14900-2017);

B5) 5-35 pbw, preferably 10-20 pbw, based on 100 pbw of component B, of a polyether polyol with a functionality of 3-5, preferably 3.5-4.2, a hydroxyl value of<450 mgKOH/g (test method ISO 14900-2017) and viscosity of <30000 mPa·s (test method ISO 3219-1993) started from o-toluenediamine; and

B6) 0-20 pbw, preferably 0-15 pbw, based on 100 pbw of component B, of a polyester polyol with a functionality of ≤3 and a hydroxyl value of <450 mgKOH/g (test method ISO 14900-2017).

Preferably, the pH value of the mixture of component B and component C1 is 4.5-7, preferably 5-6.8, more preferably 5-6.5.

Preferably, the content of component C) is 2-30% by weight, preferably 5-25% by weight, based on the total weight of component B being 100% by weight.

Preferably, component C2) at least one physical blowing agent is at least one of a pentane, halogenated olefin or a mixture thereof, preferably a mixture of at least one pentane and at least one halogenated olefin. The pentane is preferably selected from cyclopentane, isopentane, n-pentane or a combination thereof, and the halogenated olefin is preferably selected from monochlorotrifluoropropene, hexafluorobutene or a combination thereof.

Preferably, the reaction system comprises component D, at least one flame retardant, with a content of 5-30 pbw, preferably 5-20 pbw, based on 100 pbw of component B.

Preferably, the content of a non-halogen flame retardant in the flame retardant is 5-40% by weight, preferably

10-30% by weight, based on the total weight of the flame retardant being 100% by weight.

Preferably, the reaction system comprises component E) 1.1-4 pbw, preferably 1.2-3 pbw, more preferably 1.3-2.5 pbw, based on 100 pbw of component B, of at least one catalyst.

Preferably, the catalyst is selected from blowing catalysts, gel catalysts, trimerization catalysts or a combination thereof.

Preferably, the blowing catalyst is selected from pentamethyl diethylene triamine, bis-dimethylamino ethyl ether, N,N,N',N"-tetramethyl ethylene diamine, N,N,N',N"-tetramethyl butylene diamine or tetramethyl hexamethylene diamine, or a mixture thereof in any ratio. The gel catalyst is selected from dimethylcyclohexylamine or dimethylbenzylamine, or a mixture thereof in any ratio. The trimerization catalyst is selected from methyl ammonium salts, ethyl ammonium salts, octyl ammonium salts, hexahydrotriazine or organometallic bases, or a mixture thereof in any ratio.

Preferably, the reaction system comprises component F) 1-6 pbw, preferably 1-5 pbw, more preferably 1.5-4 pbw, based on 100 pbw of component B, of at least one foam stabilizer.

Preferably, the cream time of the reaction system at room temperature such as 25°C is ≤24 seconds, preferably ≤22 seconds, and more preferably ≤20 seconds.

Preferably, the cream time of the inventive polyurethane reaction system comprising an organic acid is reduced by ≥10%, preferably ≥15%, more preferably ≥20%, compared with that of the polyurethane reaction system without organic acid.

Preferably, the thread-pulling time of the reaction system at room temperature such as 25°C is ≤150 seconds, preferably ≤145 seconds, and more preferably ≤140 seconds.

Preferably, the isocyanate index of the polyurethane reaction system is 105-140, preferably 110-135, more preferably 115-130.

Another aspect of the present invention is to provide a rigid polyurethane foam prepared by the reaction of the aforementioned polyurethane reaction system of the present invention.

Preferably, the thermal conductivity at 25°C of the rigid polyurethane foam is ≤22.40 mW/m*K, preferably ≤22.10 mW/m*K, more preferably ≤22.00 mW/m*K (test method ASTM C177-2010).

Preferably, the thermal conductivity at 25°C of the rigid polyurethane foam prepared by the inventive polyurethane reaction system comprising an organic acid is decreased/reduced by ≥1%, preferably ≥1.5% (test method ASTM C177-2010), compared with that of the polyurethane reaction system without organic acid. Specifically, if the thermal conductivity of the rigid polyurethane foam prepared by the inventive polyurethane reaction system comprising an organic acid is h and the thermal conductivity of the rigid polyurethane foam prepared by the polyurethane reaction system without organic acid is g, the reduction in thermal conductivity of the rigid polyurethane foams prepared by the polyurethane reaction system comprising an organic acid is (g-h)*100%/g.

Preferably, the bonding strength of the polyurethane foam is ≥182 kPa, preferably ≥185 kPa (test method GB9641-1988).

Preferably, the bonding strength of the rigid polyurethane foam prepared by the inventive polyurethane reaction system comprising an organic acid is increased by ≥1%, preferably ≥2%, more preferably ≥3% (test method ASTM GB9641-1988), compared with that of the polyurethane reaction system without organic acid. Specifically, if the bonding strength of the rigid polyurethane foam prepared by the inventive polyurethane reaction system comprising an organic acid is a and the bonding strength of the rigid polyurethane foam prepared by the polyurethane reaction system without organic acid is b, the increase in the bonding strength of the rigid polyurethane foam prepared by the polyurethane reaction system comprising an organic acid is (a-b)*100%/b.

Still another aspect of the present invention is to provide a method for preparing a rigid polyurethane foam by the reaction of the polyurethane reaction system of the present invention.

Preferably, the method is suitable for discontinuous processes and open foaming processes.

Preferably, the core density of the rigid polyurethane foam is 30-80 kg/m$^3$, preferably 35-65 kg/m$^3$ (test method ISO 845-2006).

Preferably, the thermal conductivity at 25°C of the rigid polyurethane foam is ≤22.40 mW/m*K, preferably ≤22.10 mW/m*K, more preferably ≤22.00 mW/m*K (test method ASTM C177-2010).

Preferably, the thermal conductivity at 25°C of the rigid polyurethane foam prepared by the polyurethane reaction system comprising an organic acid is reduced by ≥1%, preferably ≥1.5% (test method ASTM C177-2010), compared with that of the polyurethane reaction system without organic acid.

Still another aspect of the present invention is to provide a polyurethane composite board comprising the rigid polyurethane foam of the present invention.

Yet another aspect of the present invention is to provide a method for preparing a polyurethane composite board, comprising:

fixing two surface layers; and
injecting a polyurethane reaction system between the two surface layers, said polyurethane reaction system being

reacted, foamed and cured to obtain the polyurethane composite board.

Preferably, the two surface layers are fixed by a mold including an upper cover and a lower cover, wherein the two surface layers are respectively fixed on the inner surface of the upper cover and the inner surface of the lower cover.
Still another aspect of the present invention is to provide a thermal insulation product comprising the rigid polyurethane foam of the present invention.
Preferably, the thermal insulation product is selected from containers, refrigerators, freezers, movable board houses, freezer houses, refrigerated boxes, refrigerated trucks, water heaters, heat-preserving barrels, heat-preserving boxes, heat-preserving pipes and heat insulation boxes, preferably roof panels, side panels, bottom panels or door panels of containers, roof panels, side panels, bottom panels or door panels of movable board houses, roof panels, side panels, bottom panels or door panels of freezer houses, and insulation panels of air-conditioners.
By repeated experiments, it is unexpectedly found that the polyol composition of the present invention comprising an organic acid component and a corresponding polyol composition ensures that the cream time of the obtained polyurethane reaction system, especially the polyurethane reaction system comprising an organic acid and a corresponding physical blowing agent and polyol composition etc. is greatly shortened/reduced, thus significantly improving the production efficiency, and thereby increasing productivity and saving costs. At the same time, the polyol composition of the present invention not only improves the thermal insulation performance of the rigid polyurethane foam prepared therefrom simply and efficiently, but also enhances other physical properties, such as compressive strength and bonding strength as well. Moreover, it is unexpectedly found that the cell stability and fluidity of the rigid polyurethane foam prepared by the reaction system of the present invention are better, while its thermal conductivity is reduced.
In a preferred embodiment of the present invention, a polyurethane reaction system comprising a polyol composition comprising component B (polyol composition) with a specific range of pH value (for example, 4.5-7, preferably 5-6.5) has better cream time and/or thread-pulling time. At the same time, the polyurethane foam produced therefrom may have more satisfactory thermal insulation performance.

## Embodiments

The following terms used in the present invention have the following definition or explanation.

Bonding strength refers to the strength at which the bonded portion is broken by applying a load/force;
Thermal conductivity refers to the heat transferred by a material with a unit thickness in an area of 1 square meter within a unit temperature difference and a unit time under stable heat transfer condition according to the test method ASTM C177-2010;
Core density refers to the density of the foam center tested under the condition of excessive filling in a mold used in the manufacturing process of polyurethane composite boards, i.e. the density of molded foam core;
pbw refers to the parts by weight of each component;
Functionality refers to a value measured according to the formula in the industry: functionality = hydroxyl value* molecular weight / 56100; wherein the molecular weight is determined by GPC and high performance liquid chromatography;

Isocyanate index refers to a value calculated by the following formula:

$$\text{isocyanate index} = \frac{\text{moles of isocyanate groups (NCO groups) in component A}}{\text{moles of groups reactive toward isocyanate groups in component B}} \times 100$$

## Components of the polyurethane foam reaction system

### A) polyisocyanate

Any organic polyisocyanate, including aromatic, aliphatic and cycloaliphatic polyisocyanates and combinations thereof, can be used to prepare the rigid polyurethane foam of the present invention. The polyisocyanate may be represented by the general formula $R(NCO)_n$, where R represents an aliphatic hydrocarbon group containing 2-18 carbon atoms, an aromatic hydrocarbon group containing 6-15 carbon atoms, and an araliphatic hydrocarbon group containing 8-15 carbon atoms, and n=2-4.
Useful polyisocyanate includes, preferably but not limited to, vinyl diisocyanate, tetramethylene 1,4-diisocyanate, hexamethylene diisocyanate (HDI), dodecyl 1,2-diisocyanate, cyclobutane-1,3-diisocyanate, cyclohexane-1,3-diisocyanate, cyclohexane1,4-diisocyanate, 1-isocyanato-3,3,5-trimethyl-5-isocyanatomethyl cyclohexane, hexahydrotoluene-2,4-diisocyanate, hexahydrophenyl-1,3-diisocyanate, hexahydrophenyl-1,4-diisocyanate, perhydro-diphenylmethane-2,4-diisocyanate, perhydro-diphenylmethane-4,4-diisocyanate, phenylene 1,3-diisocyanate, phenylene 1,4-diisocyanate, stilbene 1,4-diisocyanate, 3,3-dimethyl 4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanate and/or diphenylmethane diisocyanate homologues with more rings, polyphenylene polymethylene polyisocyanate (polymeric MDI), naphthylene-1,5-diisocyanate (NDI), their isomers, any mixtures of them and their isomers.

Useful polyisocyanate also includes isocyanates obtained by modification with carbodiimide or allophanate, preferably, but not limited to, diphenylmethane diisocyanate, carbodiimide-modified diphenylmethane diisocyanate, their isomers, and mixtures of them and their isomers.

When used in the present invention, the polyisocyanate includes dimers, trimers, tetramers of the isocyanate, or a combination thereof.

In a preferred embodiment of the present invention, the polyisocyanate component is selected from polymeric MDI.

NCO content of the organic polyisocyanate of the present invention is 20-33% by weight, preferably 25-32% by weight, and particularly preferably 30-32% by weight. NCO content is measured according to GB/T 12009.4-2016.

Organic polyisocyanate may also be used in the form of polyisocyanate prepolymers. These polyisocyanate prepolymers can be obtained by the reaction of an excess of the above-mentioned organic polyisocyanate with a compound having at least two isocyanate-reactive groups at a temperature of, for example, 30 to 100°C, preferably about 80°C. NCO content of the polyisocyanate prepolymer of the present invention is 20-33% by weight, preferably 25-32% by weight. NCO content is measured according to GB/T 12009.4-2016.

Preferably, the content of the isocyanate of the present invention is 30-70% by weight, based on the total weight of the polyurethane reaction system.

**B) polyol**

In addition to polyols B1) and B2), the polyol composition of the present invention may comprise a further polyol such as a further polyether polyol, polyester polyol, polycarbonate polyol or a mixture of any of the foregoing.

Said further polyol is preferably one or more polyether polyols, wherein at least one of the polyether polyols is an amine-started polyol. The polyether polyol may have a functionality of 2 - 8, preferably 3 - 6, and a hydroxyl value of 50 - 1200 mg KOH/g, preferably 200 - 800 mg KOH/g.

The polyether polyol can be prepared by a known process. It is usually prepared from ethylene oxide or propylene oxide with ethylene glycol, 1,2-propanediol, 1,3-propanediol, diethylene glycol, glycerol, trimethylolpropane, pentaerythritol, triethanolamine, toluene diamine, sorbitol, sucrose or any combination thereof as a starter.

In addition, the polyether polyol may also be prepared by reacting at least one olefin oxide containing an alkylene group of 2-4 carbon atoms with a compound containing 2-8, preferably but not limited to, 3-8 active hydrogen atoms or another reactive compound in the presence of a catalyst.

Examples of the catalyst are alkali metal hydroxides, such as sodium hydroxide, potassium hydroxide, or alkali metal alkoxides, such as sodium methoxide, sodium ethoxide or potassium ethoxide or potassium isopropoxide.

Useful olefin oxide includes, preferably but not limited to, tetrahydrofuran, ethylene oxide, 1,2-propylene oxide, 1,2-butylene oxide, 2,3-butylene oxide, styrene oxide, and any mixture thereof.

Useful compound containing active hydrogen atoms includes polyhydroxy compounds, preferably but not limited to, water, ethylene glycol, 1,2-propanediol, 1,3-propanediol, diethylene glycol, trimethylolpropane, and any mixture thereof, more preferably polyhydric, especially trihydric or polyhydric alcohols, such as glycerol, trimethylolpropane, pentaerythritol, sorbitol and sucrose. Useful compound containing active hydrogen atoms also includes, preferably but not limited to, organic dicarboxylic acids, such as succinic acid, adipic acid, phthalic acid and terephthalic acid, or aromatically or aliphatically substituted diamines, such as ethylene diamine, diethylene triamine, triethylene tetramine, propylene diamine, butane diamine, hexamethylene diamine or toluene diamine.

Useful reactive compound includes ethanolamine, diethanolamine, methylethanolamine, ethylethanolamine, methyldiethanolamine, ethyldiethanolamine, triethanolamine, and ammonia.

The polyether polyol prepared with an amine as the starter includes a compound obtained by reacting an amine as the starter with an alkylene oxide compound.

When used in the present invention, the term "alkylene oxide compound" generally refers to those having the following general formula (I):

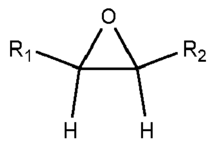

(I)

wherein $R_1$ and $R_2$ are independently selected from H, $C_1$-$C_6$ linear and branched alkyls, phenyl and substituted phenyls.

Preferably, $R_1$ and $R_2$ are independently selected from H, methyl, ethyl, propyl and phenyl.

Methods for preparing "alkylene oxide compound" are known by those skilled in the art. For example, it can be obtained by the oxidation reaction of an olefin compound.

Examples of the alkylene oxide compound that can be used in the present invention include, but are not limited to, ethylene oxide, 1,2-propylene oxide, 1,2-butylene oxide, 2,3-butylene oxide, styrene oxide, or a mixture thereof, particularly preferably a mixture of ethylene oxide and 1,2-propylene oxide.

When used in the present invention, the term "alkylene oxide compound" also includes oxacycloalkanes, examples of which include, but are not limited to, tetrahydrofuran and oxetane.

When used in the present invention, the term "amine" refers to a compound containing a primary amino group, a secondary amino group, a tertiary amino group, or a combination thereof. Examples of compounds that can be used as the amine of the present invention include, but are not limited to, triethanolamine, ethylenediamine, toluene diamine, diethylene triamine, triethylene tetramine and their derivatives, preferably ethylene diamine, toluene diamine, particularly preferably toluene diamine.

Examples of polyether polyols that can be used in the present invention are polyether polyols started with aromatic amines, preferably polyether polyols based on propylene oxide started with diphenylmethane diamine.

**Blowing agent**

In addition to blowing agents C1) and C2), component C of the present invention may comprise further physical blowing agents and/or further chemical blowing agents. Preferably, the content of component C is 2-30% by weight, preferably 5-25% by weight, based on the total weight of component B.

Useful further blowing agents include water, halogenated hydrocarbons, and hydrocarbon compounds, etc. Useful halogenated hydrocarbons are preferably pentafluorobutane, pentafluoropropane, monochlorotrifluoropropene, hexafluorobutene, HCFC-141b (monofluorodichloroethane), HFC-365mfc (pentafluorobutane), HFC-245fa (pentafluoropropane) or any mixtures thereof. Useful hydrocarbon compounds preferably include butane, pentane, cyclopentane (CP), hexane, cyclohexane, heptane, and any mixtures thereof. Preferably, the further blowing agent is selected from water, monofluorodichloroethane, cyclopentane, pentafluorobutane, pentafluoropropane, 1-chloro-3,3,3-trifluoropropene, 1-chloro-2,3,3,3-tetrafluoropropene, hexafluorobutene or a combination thereof.

**Catalyst**

The polyurethane reaction system of the present invention may further comprise a catalyst, including blowing catalyst, gel catalyst and trimerization catalyst.

Preferably, the blowing catalyst is selected from pentamethyl diethylene triamine, bis-dimethyl amino ethyl ether, N,N,N',N"-tetramethyl ethylene diamine, N,N,N',N"-tetramethyl butylene diamine and tetramethyl hexamethylene diamine, or a mixture thereof in any ratio. The gel catalyst is selected from dimethylcyclohexylamine and dimethylbenzylamine or a mixture thereof in any ratio. The trimerization catalyst is selected from methyl ammonium salts, ethyl ammonium salts, octyl ammonium salts, hexahydrotriazine and organometallic bases or a mixture thereof in any ratio.

The polyurethane reaction system of the present invention further comprises at least one flame retardant, including halogen flame retardants and non-halogen flame retardants.

In an embodiment of the present invention, the reaction system of the polyurethane foam of the present invention further comprises a surfactant/foam stabilizer. The surfactant is preferably, but not limited to, ethylene oxide derivatives of siloxanes.

By repeated experiments, it is unexpectedly found that the polyurethane reaction system of the present invention can greatly reduce the cream time and/or thread-pulling time and improve production efficiency. At the same time, it can also simply and efficiently improve the thermal insulation performance of rigid polyurethane foams, and also maintain or improve other physical properties well. The polyurethane reaction system of the invention is applicable to discontinuous or open foaming processes, and can greatly improve the rise state of the system, thereby improving the thermal insulation and the bonding performance of the foam systems.

In particular, it is unexpectedly found in experiments that the polyurethane reaction system of the present invention comprising an isocyanate, a specific polyol and a corresponding foaming agent comprising an organic acid

(such as, formic acid) and the like can significantly improve the rise time of polyurethanes, and make cells of the polyurethane PUR rigid foam systems small, so that the curing of foams is significantly improved, and the bonding strength is also greatly enhanced.

In particular, it is unexpectedly found that the preferred polyurethane reaction system of the present invention comprising at least two physical blowing agents (preferably pentanes and halogenated olefins) and an corresponding isocyanate, a polyol and an organic acid and the like can effectively further reduce the thermal conductivity and produce polyurethane products with better quality. Moreover, it can also be more economical and environmentally friendly on the basis of meeting production needs, and achieves a balance between economic feasibility and environmental protection.

The method of the present invention is simple and easy to operate, and does not need an increase of expensive equipment investment, which is very beneficial to the production of thermal insulation products.

**Polyurethane foam**

In an embodiment of the present invention, the core density of the rigid polyurethane foam is preferably 30-80 $kg/m^3$, preferably 35-65 $kg/m^3$ (test method ISO 845-2006).

Preferably, the thermal conductivity at 25°C of the rigid polyurethane foam is ≤22.40 mW/m*K, preferably ≤22.10 mW/m*K, more preferably ≤22.00 mW/m*K (test method ASTM C177-2010).

The polyurethane foam of the present invention can be used to prepare polyurethane composite boards. The polyurethane composite boards of the present invention may be composed of two surface layers and a polyurethane foam layer between said two surface layers.

Preferably, the material of the two surface layers of the composite board is selected from iron, aluminum, FRP, PS and ABS.

The method for preparing a polyurethane composite board of the present invention is preferably carried out by a discontinuous production process. The composite board usually comprises a cavity and the polyurethane foam filled therein. The cavity material is selected from metals, plastics, and composite sheets, etc. A hollow shell may be prefabricated firstly, and then the hollow shell is sealed at the joint parts, wherein injection holes and vent holes are retained. Finally, the hollow shell is placed in a foaming mold, and the polyurethane composition is applied to the cavity of the hollow shell through the mold and the injection holes of the hollow shell. After the foaming reaction of the polyurethane composition is completed, the foamed article is taken out of the mold, so that a polyurethane composite can be obtained.

In some embodiments of the present invention, the cavity is plate-shaped, U-shaped or hollow cylinder-shaped.

The rigid polyurethane foams of the present invention are mainly used for preparing thermal insulation products. Polyurethane composites prepared by the discontinuous process can be used in household appliances, such as refrigerators, freezers, refrigerated boxes, refrigerator trucks, water heaters, heat-preserving barrels, heat-preserving boxes and heat insulation boxes, etc. The thermal insulation products of the present invention include the aforementioned polyurethane foams or polyurethane composite boards. Thermal insulation products may be refrigerators, freezers, refrigerated boxes, refrigerator trucks, water heaters, heat-preserving barrels, heat-preserving boxes and heat insulation boxes, etc.

**Examples**

Description of raw materials:

NJ380, polyether polyol, available from Ningwu New Material Development Co., Ltd., Jurong, with a hydroxyl value of 380, viscosity of 11250 and a functionality of 5.8;
NJ8268, polyether polyol, available from Ningwu New Material Development Co., Ltd., Jurong, with a hydroxyl value of 310, viscosity of 1200 and a functionality of 4.0;
NJ4502, polyether polyol, available from Ningwu New Material Development Co., Ltd., Jurong, with a hydroxyl value of 450, viscosity of 17000 and a functionality of 5.2;
NJ635C, polyether polyol, available from Ningwu New Material Development Co., Ltd., Jurong, with a hydroxyl value of 500, viscosity of 5800 and a functionality of 4.5;
Z450, polyether polyol, available from Covestro Taiwan (China) Co., Ltd., with a hydroxyl value of 345, viscosity of 12000 and a functionality of 4.0;
PS3152, polyester polyol, available from Stepan Company, with a hydroxyl value of 315, viscosity of 3500 mPa.s and a functionality of 2.0;
TCPP, halogen flame retardant, available from Yoke Technology Co., Ltd., Jiangsu;
TEP, non-halogen flame retardant, available from Yoke Technology Co., Ltd., Jiangsu; L6920, foam stabilizer, available from Momentive Performance Materials (China) Co., Ltd.; Cyclopentane, available from MEILONG Cyclopentane Chemical Co., Ltd, Guangzhou; LBA, available from Honeywell;

Opteon 1100, available from Chemours;
Dabco Polycat 41, polyurethane synthesis catalyst, available from Air Products and Chemicals (China) Co., Ltd.;
Dabco polycat 8, polyurethane synthesis catalyst, available from Air Products and Chemicals (China) Co., Ltd.;
Desmodur® 44v20L, isocyanate, with NCO content of 31.5% by weight, available from Covestro Polymers (China) Co., Ltd.;
Formic acid, 98% purity, available from Collins.

Explanation of terms:

Polyol mixture: the polyol mixture is a blend of polyols used for preparing rigid polyurethane foams.
Polyol formulation: a mixture of the polyol mixture and a foam stabilizer, a flame retardant, a catalyst, a chemical blowing agent, etc. required for preparing rigid polyurethane foams, but excluding physical blowing agents.
Polyisocyanate: a compound containing two or more isocyanate structures in its molecular structure or a mixture thereof, also known as "black material".
Cream time: at 25°C, the time from the mixing of the polyol formulation (pre-mixed with the physical blowing agent) with the polyisocyanate to the emulsification of the mixture and the rise of the liquid level.
Thread-pulling time: at 25°C, the time from the mixing of the polyol formulation (pre-mixed with the physical blowing agent) with the polyisocyanate to the appearance of the thread-pulling state of the reaction mixture.
Free foam density: density of center of the freely rising rigid polyurethane foam.
Core density: density of the rigid polyurethane foam prepared in the mold after removing the thick skin on the surface.
Viscosity: it refers to the viscosity of the system at 25°C, unless otherwise specified.

Test methods:
Bubble evaluation:

The foaming reaction material is injected into a mold with a size of 2000 mm*200 mm*50 mm in 15% overfilling. After being cured, the foam is taken out. The bubble performance of the process is evaluated by the foam height at the position where the bubbles appear. The higher the position where the bubbles begin to appear, the better the bubble performance.
Taking the comparative example as reference, if the position where the bubbles begin to appear in the system is higher than that in the comparative example, it is recorded as good,
otherwise it is recorded as poor. The specific parameters are as follows: mold size: 2000 mm*200 mm*50 mm; mold temperature: 35°C; foaming direction: vertical foaming;
demolding time: 15 minutes.

Test of foam physical properties:
The kraft paper box was put into a mold with a size of 500 mm*500 mm*75. The mold temperature was controlled at the set value (40°C, unless otherwise specified). Then, a set amount of foam reaction material was injected. After being cured, the foam was taken out, and left in an environment with a temperature of 23°C and a humidity of 50% for 24 hours for testing the core density, compressive strength and thermal conductivity of the foam.

Among them, the density was tested in accordance with the standard GB6343. The compression strength was tested in accordance with the standard GB8813-2020. The thermal conductivity was tested in accordance with ASTM C177-2010.

Test of bonding performance:
An aluminum plate with a size of 50mm*50mm was placed at the designated position in the mold. Then, foaming was carried out in accordance with the procedure for preparing foam sample blocks for the test of physical properties. Foam samples for the test of bonding strength were prepared by cutting along a aluminum plate with a size of 50mm*50mm. The bonding strength was measured in accordance with GB9641-1988.

<u>Preparation of the rigid polyurethane foam</u>
Constituents of component B shown in table 1 were stirred evenly according to their ratios for later use. Cyclopentane was added in the parts shown in table 2 and stirred evenly. The prepared raw materials (components A and B) were kept at 25°C in a thermostat for use. The mold angle was adjusted to the specific angle in the examples or comparative examples shown in Table 2 and Table 3. Then, A and B (including foaming agent) were stirred evenly according to the ratios shown in Table 2 or Table 3 (stirring time of 10 seconds, and stirring speed of 4000 rpm), and then poured into a mold. When reaching the defined demolding time, the mold was opened to take out the foamed board for the next process.

Table 1 - Ratios of constituents of component B in the polyurethane reaction system of comparative example 1 (Comp. Ex. 1) and example 1-4 (unit: pbw, based on 100 pbw of component B; water in %by weight, based on the total mass of component B)

| System No.: | Comp. Ex. 1 | Ex. 1 | Ex. 2 | Ex. 3 | Ex. 4 |
|---|---|---|---|---|---|
| NJ 4502 | 40 | 40 | 40 | 40 | |
| NJ 380 | | | | | 40 |
| NJ 635C | 30 | 30 | 30 | 30 | 30 |
| NJ 8268 | 10 | 10 | 10 | 10 | 10 |
| PS 3152 | | | | | 5 |
| Z 450 | 20 | 20 | 20 | 20 | 15 |
| Formic acid | 0 | 0.8 | 1 | 1.3 | 1 |
| TCPP | 13 | 13 | 13 | 13 | 13 |
| L 6920 | 2 | 2 | 2 | 2 | 2 |
| Polycat 8 | 0.4 | 1.1 | 1.3 | 1.5 | 1.2 |
| Polycat 41 | 0.65 | 0.65 | 0.65 | 0.65 | 0.65 |
| $H_2O$ | 2.00% | 1.50% | 1.40% | 1.30% | 1.40% |
| pH | 9.1 | 6.1 | 5.8 | 5.4 | 5.7 |
| Polyol formulation | 100 | 100 | 100 | 100 | 100 |
| Cyclopentane | 12 | 12 | 12 | 12 | 12 |
| Desmodur 44V20L | 130 | 130 | 130 | 130 | 130 |
| Index | 112 | 118 | 119 | 120 | 125 |

Table 2 - Test results of polyurethane foam performance of comparative example 1 (Comp. Ex. 1) and examples 1-4

| System No.: | Comp. Ex. 1 | Ex. 1 | Ex. 2 | Ex. 3 | Ex. 4 |
|---|---|---|---|---|---|
| pH | 9.1 | 6.1 | 5.8 | 5.4 | 5.7 |
| Polyol formulation | 100 | 100 | 100 | 100 | 100 |
| Cyclopentane | 12 | 12 | 12 | 12 | 12 |
| Desmodur 44V20L | 130 | 130 | 130 | 130 | 130 |
| Index | 112 | 118 | 119 | 120 | 125 |
| Cream time, sec | 25 | 18 | 15 | 13 | 15 |
| Thread-pulling time, sec | 134 | 132 | 135 | 138 | 125 |
| Free foam density, $kg/m^3$ | 26.8 | 26.9 | 27.0 | 26.8 | 27.0 |
| Core density, $kg/m^3$ | 39.4 | 39.4 | 39.2 | 38.8 | 39.4 |
| Thermal conductivity, mW/m*K, at 25°C | 22.41 | 21.95 | 21.89 | 21.95 | 21.70 |
| Compressive strength, kPa, (vertical direction) | 183 | 189 | 192 | 189 | 188 |
| Compressive strength, kPa, (parallel direction) | 234 | 244 | 240 | 239 | 238 |
| Bonding strength, kPa | 181 | 192 | 191 | 190 | 192 |

(continued)

| System No.: | Comp. Ex. 1 | Ex. 1 | Ex. 2 | Ex. 3 | Ex. 4 |
|---|---|---|---|---|---|
| Bubble performance | reference | good | good | good | good |

The experimental results in Table 2 show that, when other components are the same, the cream time of the reaction system comprising formic acid is shorter than that of the reaction system without formic acid, the bubble performance is better, and the bonding strength is improved, while the thermal conductivity is significantly reduced.

Table 3 - Ratios of constituents of component B in comparative example 1 and examples 5 and 6:

| System No.: | Comp. Ex. 1 | Ex. 5 | Ex. 6 |
|---|---|---|---|
| NJ 4502 | 40 | 40 | 40 |
| NJ 635C | 30 | 30 | 30 |
| NJ 8268 | 10 | 10 | 10 |
| Z 450 | 20 | 20 | 20 |
| Formic acid | 0 | 1 | 1 |
| TCPP | 13 | 13 | 13 |
| L 6920 | 2 | 2 | 2 |
| PC 8 | 0.4 | 1.3 | 1.3 |
| PC 41 | 0.65 | 0.65 | 0.65 |
| $H_2O$ | 2.00% | 1.40% | 1.40% |
| pH | 9.1 | 5.8 | 5.8 |
| Polyol formulation | 100 | 100 | 100 |
| Cyclopentane | 12 | 9 | 9 |
| LBA | | 6 | |
| Opteon 1100 | | | 6 |
| Desmodur 44V20L | 130 | 130 | 130 |
| Index | 112 | 119 | 119 |

Table 4 - Experimental results of comparative example 1 and examples 5 and 6:

| System No.: | Comp. Ex. 1 | Ex. 5 | Ex. 6 |
|---|---|---|---|
| Cream time, sec | 25 | 15 | 15 |
| Thread-pulling time, sec | 134 | 132 | 125 |
| Free foam density, kg/$m^3$ | 26.8 | 17.6 | 28.4 |
| Core density, kg/$m^3$ | 39.4 | 39.8 | 40.5 |
| Thermal conductivity at 25°C, mW/m*K | 22.41 | 20.87 | 20.65 |
| Compressive strength, kPa, (vertical direction) | 183 | 204 | 206 |
| Compressive strength, kPa, (parallel direction) | 234 | 238 | 240 |
| Bonding strength, kPa | 181 | 193 | 189 |
| Bubble performance | reference | good | good |

As can be seen from the above experimental results of comparative example 1 and examples 5 and 6, the thermal conductivity property of the system is further reduced, and the bonding strength is further improved, when there

are two different physical blowing agents (mixture of a pentane and a halogenated olefin) in the system.

Although the preferred embodiments of the present invention have been disclosed as above, it is not intended to limit the present invention. Those skilled in the art can make various change and modification without departing from the spirit and scope of the present invention. Therefore, the protection scope of the present invention should be defined by the scope of the claims.

## Claims

**1.** A polyol composition comprising:

component B comprising:

B1) 20-90 pbw, preferably 20-70 pbw, based on component B, of a polyether polyol with a functionality of ≥3 and a hydroxyl value of >200 mgKOH/g, preferably 200-550 mgKOH/g, more preferably 250-500 mgKOH/g (test method ISO 14900-2017);
B2) 3-40 pbw, preferably 5-35 pbw, more preferably 10-20 pbw, based on 100 pbw of component B, of at least one polyether polyol with a functionality of 3-5 and a hydroxyl value of <480 mgKOH/g (test method ISO 14900-2017) started from an aromatic amine;

component C comprising:

C1) 0.2-3 pbw, preferably 0.3-2.5 pbw, more preferably 0.3-1 pbw, based on 100 pbw of component B, of at least one organic acid, preferably formic acid; and
C2) at least one physical blowing agent.

**2.** The polyol composition according to claim 1, wherein the pH value of the mixture of components of the polyol composition excluding component C2) is 4.5-7, preferably 5-6.8, more preferably 5-6.5.

**3.** The polyol composition according to any one of claims 1 or 2, wherein C2) at least one physical blowing agent is at least one of a pentane, halogenated olefin or a mixture thereof, preferably a mixture of at least one pentane and at least one halogenated olefin.

**4.** The polyol composition according to any one of claims 1-3, wherein component B further comprises at least one of the following constituents:

B3) 5-45 pbw, preferably 7-25 pbw, based on 100 pbw of component B, of a polyether polyol with a functionality of ≥4 and a hydroxyl value of < 400 mgKOH/g (test method ISO 14900-2017);
B4) 20-70 pbw, preferably 30-65 pbw, based on 100 pbw of component B, of a polyether polyol with a functionality of >4 and a hydroxyl value of >400 mgKOH/g (test method ISO 14900-2017);
B5) 5-35 pbw, preferably 10-20 pbw, based on 100 pbw of component B, of a polyether polyol with a functionality of 3-5, preferably 3.5-4.2, a hydroxyl value of<450 mgKOH/g (test method ISO 14900-2017) and viscosity at 25°C of <30000 mPa·s (test method ISO 3219-1993) started from o-toluenediamine; and B6) 0-20 pbw, preferably 0-15 pbw, based on 100 pbw of component B, of a polyester polyol with a functionality of ≤3 and a hydroxyl value of <450 mgKOH/g (test method ISO 14900-2017).

**5.** The polyol composition according to any one of claims 1-4, wherein the cream time of a polyurethane reaction system comprising the polyol composition comprising an organic acid is reduced by ≥10%, preferably ≥15%, more preferably ≥20%, compared with that of a polyurethane reaction system comprising the polyol composition without organic acid.

**6.** A polyurethane reaction system comprising:

component A comprising polyisocyanate; and
the polyol composition according to any one of claims 1-5.

**7.** The reaction system according to claim 6, wherein the cream time of the reaction system is ≤24 seconds, preferably ≤22 seconds, and more preferably ≤20 seconds.

8. The reaction system according to any one of claims 6 or 7, wherein the cream time of the polyurethane reaction system comprising the organic acid is reduced by ≥10%, preferably ≥15%, more preferably ≥20%, compared with that of the polyurethane reaction system without the organic acid.

9. The reaction system according to any one of claims 6-8, wherein the isocyanate index of the polyurethane reaction system is 105-140, preferably 110-135, more preferably 115-130.

10. A method for preparing a rigid polyurethane foam by the reaction of the polyurethane reaction system according to any one of claims 6-9.

11. A rigid polyurethane foam prepared by a reaction of the polyurethane reaction system according to any one of claims 6-9.

12. The rigid polyurethane foam according to claim 11, wherein the thermal conductivity at 25°C of the rigid polyurethane foam is ≤22.40 mW/m*K, preferably ≤22.10 mW/m*K, more preferably ≤22.00 mW/m*K (test method ASTM C177-2010).

13. The rigid polyurethane foam according to claim 11 or 12, wherein the thermal conductivity at 25°C of the rigid polyurethane foam prepared by the polyurethane reaction system comprising the organic acid is reduced by ≥1%, preferably ≥1.5% (test method ASTM C177-2010), compared with that of the polyurethane reaction system without the organic acid.

14. The rigid polyurethane foam according to any one of claims 11-13, wherein the bonding strength of the rigid polyurethane foam prepared by the polyurethane reaction system comprising the organic acid is increased by ≥1%, preferably ≥2%, more preferably ≥3% (test method ASTM GB9641-1988), compared with that of the polyurethane reaction system without the organic acid.

15. A polyurethane composite board comprising the rigid polyurethane foam according to any one of claims 11-14.

Europäisches Patentamt
European Patent Office
Office européen des brevets

# EUROPEAN SEARCH REPORT

Application Number
EP 21 20 6332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2020/055559 A1 (HUNTSMAN INT LLC [US]) 19 March 2020 (2020-03-19)<br>* Formulation A; paragraph [0075] - paragraph [0094]; table 1 *<br>* paragraph [0027] *<br>* claim 1; table 1 *<br>* paragraph [0068] *<br>* paragraphs [0002], [0071]; claim 21 *<br>* paragraph [0067] *<br>----- | 1-3,5-15<br><br>4 | INV.<br>C08G18/76<br>C08J9/14<br>C08J9/12<br>C08G18/48<br>C08G18/50<br>C08G18/18<br>C08J9/08 |
| X<br><br>A | US 2019/389996 A1 (ROLFSEN CHRISTINE [DE] ET AL) 26 December 2019 (2019-12-26)<br>* Inventive Example 1; paragraph [0203] - paragraph [0215]; table 1 *<br>* paragraph [0019] *<br>* Inventive Example 1; claim 27; table 1 *<br>* Inventive Example 3; table 3 *<br>* paragraph [0060]; claim 28 *<br>* paragraph [0072] *<br>----- | 1-3,5-15<br><br>4 | |
| | | | TECHNICAL FIELDS SEARCHED (IPC) |
| | | | C08G<br>C08J |

The present search report has been drawn up for all claims

1

| Place of search | Date of completion of the search | Examiner |
|---|---|---|
| Munich | 31 March 2022 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 21 20 6332

This annex lists the patent family members relating to the patent documents cited in the above-mentioned European search report. The members are as contained in the European Patent Office EDP file on
The European Patent Office is in no way liable for these particulars which are merely given for the purpose of information.

31-03-2022

| Patent document cited in search report | Publication date | Patent family member(s) | Publication date |
|---|---|---|---|
| WO 2020055559 A1 | 19-03-2020 | AU 2019338169 A1 | 01-04-2021 |
| | | BR 112021004685 A2 | 01-06-2021 |
| | | CA 3112573 A1 | 19-03-2020 |
| | | CN 112839737 A | 25-05-2021 |
| | | EP 3849701 A1 | 21-07-2021 |
| | | JP 2022500532 A | 04-01-2022 |
| | | US 2021340308 A1 | 04-11-2021 |
| | | WO 2020055559 A1 | 19-03-2020 |
| US 2019389996 A1 | 26-12-2019 | AU 2018215934 A1 | 08-08-2019 |
| | | BR 112019015360 A2 | 10-03-2020 |
| | | CA 3051166 A1 | 09-08-2018 |
| | | CN 110234672 A | 13-09-2019 |
| | | EP 3577148 A1 | 11-12-2019 |
| | | JP 2020505496 A | 20-02-2020 |
| | | KR 20190109742 A | 26-09-2019 |
| | | RU 2019127397 A | 02-03-2021 |
| | | US 2019389996 A1 | 26-12-2019 |
| | | WO 2018141716 A1 | 09-08-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5470891 A
- JP 3660375 B
- CN 104334599 A